(19) Europäisches Patentamt
European Patent Office
Office européen des brevets

(11) **EP 2 975 378 A1**

(12) **EUROPEAN PATENT APPLICATION**

(43) Date of publication:
**20.01.2016 Bulletin 2016/03**

(51) Int Cl.:
***G01N 15/02*** *(2006.01)* ***G01N 21/47*** *(2006.01)*

(21) Application number: **15176668.0**

(22) Date of filing: **14.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **18.07.2014 US 201462026557 P**
**23.12.2014 US 201414581869**

(71) Applicant: **Wyatt Technology Corporation Goleta, CA 93117 (US)**

(72) Inventor: **WYATT, Philip J.**
**Santa Barbara, CA 93105 (US)**

(74) Representative: **Eisenführ Speiser**
**Patentanwälte Rechtsanwälte PartGmbB**
**Johannes-Brahms-Platz 1**
**20355 Hamburg (DE)**

Remarks:
A request for correction 09.09.2015 has been filed pursuant to Rule 139 EPC. A decision on the request will be taken during the proceedings before the Examining Division (Guidelines for Examination in the EPO, A-V, 3.).

(54) **METHOD TO MEASURE THE STRUCTURE OF SMALL PARTICLES IN SOLUTION**

(57) A method is presented by which means small particles in solution, of various structures and of sizes up to several hundred nanometers, may be measured by light scattering means. An inventive technique is described, permitting the traditional Rayleigh-Gans approximation to be extended, allowing thereby measurement of the mean square radii of particles over a greater size range. Such determinations obviate the need to fit the collected data to a particular closed form model of which, in any event, only a few exist. The new method is particularly important for determining structural features of irregular particles whose scattering depends on their orientation with respect to the direction of the incident illumination.

EP 2 975 378 A1

**Description**

**Background**

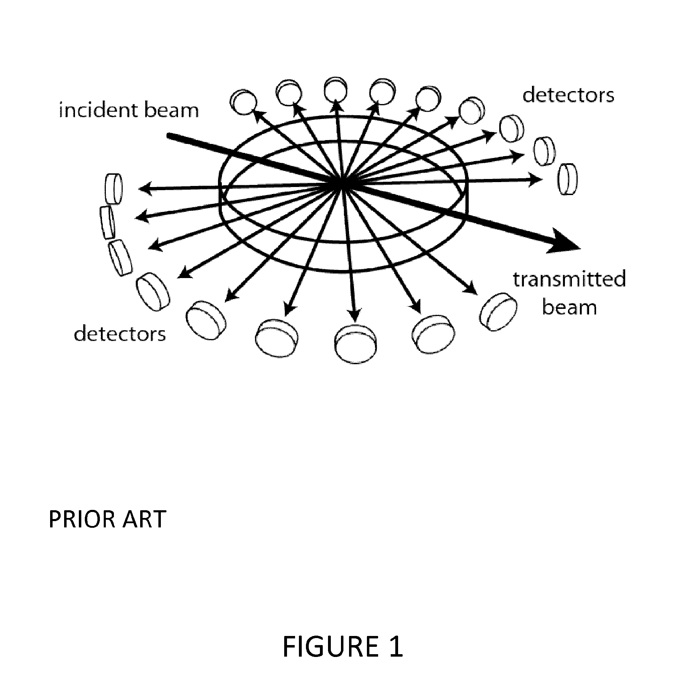

Light scattering techniques long have been used as a means to determine the size and, often, the structure of small particles. For purposes of the present invention, the term "small particles" refers to particles of sizes up to several hundred nanometers. Most of these are nanoparticles defined further as particles one of whose dimensions is less than 100nm. When such particles are in solution, measurements are usually made from ensembles of monodisperse fractions. Monodispersity is achieved generally by chromatographic separation means such as by asymmetric flow field flow fractionation (A4F), hydrodynamic chromatography, or size exclusion chromatography. Traditionally, such measurements of fractionated particles are made by illuminating a small volume with a fine beam of light, generally polarized and from a laser source, and then measuring the light scattered by such particles into a plurality of angles such as shown in Fig. 1. These measurements are referred to as multiangle light scattering (MALS) measurements. For homogenous spheres, experimental data are generally fit by least-squares means to the Lorenz scattering theory, often referred to as "Mie theory." We shall refer to such theory as simply "Lorenz-Mie" or LM theory.

A least squares fit of an assumed particle model to the collected and experimentally weighted data is used to derive the best corresponding model parameters (*e.g.* size, refractive index, *etc.*) and, thereby, a measure of the monodisperse particle fractions.

For homogeneous spheres, the LM theory is applied as well as its generalizations to include particles whose structure is spherically symmetric. Most particles of interest, however, are not spherically symmetric. This means, of course, that the collected MALS scattering data will depend on the orientation of the particle with respect to the direction of the incident light. In solution and with many particles contributing to the scattered signal, the collected signals will represent an averaging over all orientations. Yet there are no structures other than spheres that may be fit to the measured scattering data, irrespective of orientation.

In order to obtain some measure of such particles' structure, an important *approximation* is often employed. Referred to as the Rayleigh-Gans (R-G) approximation, it is applied especially for the study of macromolecules. The R-G approximation begins with the assumption that each particle is made up of very small elements, each of which is very small compared to the wavelength of the incident light. Such elements are assumed to scatter light independently. Thus the scattering from a particle made up of these elements scatters light with the same polarization as that incident upon it. The total scattered wave is comprised, therefore, of the sum of the contributions from each element. However, each scattering element of the particle, responding to the incident electrical excitation as the wave passes through it, contributes thereby to the phase of the scattered wave from the superposition of the individual in-phase scattering elements.

There are two requirements for application of the R-G approximation. First,

$$\left| m - 1 \right| << 1, \tag{1}$$

where $m = n/n_0$, $n$ is the refractive index of the particle, and $n_0$ is the refractive index of the surrounding medium, and second

$$2qa\left| m - 1 \right| << 1, \tag{2}$$

where $q = \dfrac{2\pi}{\lambda} \sin\left(\theta/2\right)$, sin ($\theta$/2), and $n_0\lambda = \lambda_0$. Equation (2) is a consequence of the fact that the forward scattered waves do not depart significantly from unscattered waves and, for very small angles, do not depart from the "nearly invisible" stricture of the Rayleigh-Gans theory, Eq.(1).

In this R-G approximation, there are many interesting results that may be obtained, especially when one includes the ability to separate particle size fractions by liquid chromatographic means, that relate to the measurement of size and structure of a variety of important scattering particles, molecules, and their aggregates. For example, the most used and familiar result is that for a homogeneous sphere of radius $a$ whose exact solution may be obtained from the complex LM theory discussed earlier. The scattered intensity per unit solid angle for incident vertically polarized light of intensity $I_0$ is given by

$$\frac{I}{I_0} = \frac{\left(ka\right)^4 V^2}{4\pi} \left| m - 1 \right|^2 \left[ G\left( 2x\sin\frac{\theta}{2} \right) \right]^2 = \frac{\left(ka\right)^4 V^2}{4\pi} \left| m - 1 \right|^2 P(\theta), \tag{3}$$

where $V = \dfrac{4}{3}\pi a^3$. The function $G(u)$ is given by

$$G(u) = \frac{3}{u^3}(\sin u - u \cos u), \tag{4}$$

and

$$P(\theta) = G^2(u) = \left[\frac{3}{u^3}(\sin u - u \cos u)\right]^2. \tag{5}$$

Fitting data to the simple angular dependence of Eq. (5) is certainly much easier than fitting such data to the LM theory. However, the limitations of Eqs. (1) and (2) generally exclude larger homogeneous spheres and/or spheres of high refractive index.

The function $P(\theta)$ is often referred to as the "particle form factor" or particle scattering function. The scattering of light by particles satisfying the R-G criteria of Eqs. (1) and (2), may always be represented by such a function, dependent upon the R-G particle structure and orientation with respect to the direction of the incident light. For simple classes of structures such as homogeneous spheres, their form is relatively simple, but for particles of more complex structure, and especially where orientation affects the detected scattering signals, it may not be possible to present it in such closed form. Note that $P(0°) = 1$.

There are some other important closed form examples, such as a random coil molecule, where

$$P(\theta) = \left(2/u^2\right)\left[\exp(-u) - 1 + u\right], \tag{6}$$

and $u = \left(\dfrac{8\pi^2 b^2 n}{3\lambda^2}\right)\sin^2\dfrac{\theta}{2}$. The mean square end-to-end distance of the coil is often referred to as $L^2$ which is equal to $nb^2$. If the coil becomes a stiff thin rod of length $L$, then the form factor averaged over all orientations may be shown to be

$$P(\theta) = \frac{1}{x}\int_0^{2\pi}\frac{\sin v}{v}dv - \left(\frac{\sin x}{x}\right), \tag{7}$$

where $x = \left(2\pi L/\lambda\right)\sin\dfrac{\theta}{2}$.

Another closed form result for non-spherically symmetric particles averaged over all their orientations is that for thin disks of radius $a$ for which

$$P(\theta) = \frac{2}{z^2}\left[1 - F(2z)\right], \tag{8}$$

and $F(u) = \dfrac{2}{u}J_1(u)$ and $z = 2ka \sin(\theta/2)$. $J_1(u)$ is the Bessel function of the first kind of order 1.

We should note, however, that for rods or disks that are not infinitely thin, and do not satisfy requirements for the application of the R-G approximation, there are few analytical forms to which measurements may be compared and structures be extracted. There is an analytical form in the R-G approximation that describes scattering from an ellipsoid of semi-axes $a, b,$ and $c$ respectively. It depends critically upon the orientation (via its direction cosines) of the three axes with respect to the direction of the incident beam. Starting from a suspension of such ellipsoids whose random orientations result in an effective averaging to produce a theoretically derived scattering pattern, attempts to derive the relative lengths of the three axes from such measurements by trying to fit MALS data collected from such particles averaged over all orientations would be extremely difficult. An article by the inventor describing details of the scattering by the simpler ellipsoid of revolution, as well as more complex structures such as superellipsoids, may be found in his article of 1968 in Applied Optics, volume 7, pages 1879 through 1896.

Associated with each measurement of light scattered from an ensemble of particles into a plurality of detector element locations $\theta_i$, and the interpretation of these multiangle light scattering (MALS) measurements, $I(\theta_i)$, by means of the Rayleigh-Gans approximation in the limit as $\theta \to 0$, is a derived quantity called the mean square radius, $\left\langle r_g^2 \right\rangle$. A particle of mass $M$ is assumed to be made up of small mass elements $m_i$. The mean square radius of such a particle is then given by

$$\left\langle r_g^2 \right\rangle = \frac{\sum m_i r_i^2}{M} = \frac{\sum v_i r_i^2}{V} = \frac{1}{V} \iiint r^2(r,\theta,\varphi)dv, \qquad (9)$$

where the density, $\rho$, of each mass element $v_i$ is assumed the same. Thus $m_i = \rho v_i$ and $M = \Sigma \rho v_i = \rho V$. $V$ is the volume of the particle formed by the individual elements $v_i$. Thus the volume $V$ of a homogeneous sphere of radius $a$ is simply $\frac{4}{3}\pi a^3$ while the volume of a tube of height $h$, radius $a$, and thickness $t$ would be $\pi h t(2a - t)$. On this basis, it is easily shown that for a sphere of radius $a$, $\left\langle r_g^2 \right\rangle = \frac{3}{5}a^2$; and for the tube, $\left\langle r_g^2 \right\rangle = \frac{L^2}{12} + a^2 + \frac{t^2}{2} - at$.

Irrespective of structure, for very small particles satisfying Eqs. (1) and (2), it may be shown that by measuring the initial variation of scattered light intensity (slope, *i.e. dP($\theta$) / d*[sin$^2\theta$/2] at $\theta$=0°), we may determine the particle's *mean square radius* directly and independent of any *a priori* knowledge of the particle's shape or orientation. This is a very important consequence of the R-G theory, though rarely used.

A formalism has been derived, providing the basis of this invention, by which means a variety of important particle structural features may be derived from MALS' measurements of monodisperse solutions of a large variety of important particle classes, even when the requirements of Eqs. (1) and (2) are not satisfied over the entire range of angles measured. Such measurements at each detection angle will correspond, of course, to an averaging over all the orientations of the contributing particles present in the sample volume illuminated. These particles include tubes, rods, ellipsoids, aggregates of various types, planks, etc. Based in part on the R-G approximation subject to some of the strictures implicit in Eqs. (1) and (2), the inventive method permits the deduction of features hitherto inaccessible. Indeed, the inventive method may be applied often when the range of validity of these equations is expanded far beyond the traditional limits of the R-G approximation.

**Summary of the invention**

An essentially monodisperse sample of liquid-borne particles, whose qualitative structure and composition are known, is exposed to a fine beam of light that is scattered by the illuminated particles into a plurality of $n$ scattering angles. From detection and measurement of these multiangle light scattering (MALS) data, and the experimental uncertainty associated with the measurement at each of the $n$ angles, a functional form factor $\Pi(\theta)$ is produced that is representative of the collected MALS scattering data of the sample measured and represents a least squares fit to the collected data. This derived form factor, generally represented by a polynomial of order $n$, where $n$ is less than the number of angles at which the scattered data are collected, will extend over a range that will include the scattering angles measured, usually between 0° to 180°. Under the special circumstances, where Eqs. (1) and (2) may be marginally valid, it is shown the derivative of $\Pi(\theta)$ with respect to sin$^2(\theta$/2) evaluated at $\theta = 0$° can provide a measure of the mean square radius, $\left\langle r_g^2 \right\rangle$, of the scattering particles. Given the known structure of the scattering particles and any dimensions known *a priori,* such as might have been previously determined, for example, by electron microscopy, the value of $\left\langle r_g^2 \right\rangle$ thus derived is used to calculate specified dimensions of the particle sample from which the MALS measurements were made. For example, were the scattering particles long rods whose diameters had been measured previously, the length of the monodisperse rods may be calculated immediately from such measurement.

**Brief Description of the drawings**

Figure 1 shows the geometry of a MALS measurement.

Figure 2 is the best fit of the R-G rod model to a set of collected MALS data for a fractionated sample of single wall carbon nanotubes.

Figure 3 is the unnormalized fit of the 5th order polynomial function $f_5\left(\sin^2\dfrac{\theta}{2}\right)$ to the data points of Fig. 2.

Figure 4 is the unnormalized fit of the 3rd order polynomial function $f_3\left(\sin^2\dfrac{\theta}{2}\right)$ to the data points of Fig. 2.

## Detailed description of the invention

As discussed above, detection of the scattered light intensity from an ensemble of illuminated particles will produce a set of MALS data that may be collected and analyzed. Before such measurements are made, it is important to insure that all members of the scattering ensemble are of the same size and physical properties. Polydisperse samples must be fractionated to obtain essentially monodisperse fractions. For liquid-borne particles, this is generally achieved by means of asymmetric flow field flow fractionation (A4F) of the initially polydisperse sample. As mentioned earlier, other fractionation means frequently used include hydrodynamic chromatography and size exclusion chromatography. In order to derive from such measurements the size and structural properties of the scattering particles from such data, some *a priori* information of their structure is generally required.

If the particles are homogeneous spheres, for example, by fitting the collected data to the Lorenz-Mie scattering theory, the particles' size and even their refractive index may be derived. If the scattering particles are well described by the Rayleigh-Gans approximation, then associated with such measurement the data may be fit to Eq. 5 such as discussed in the Background material above. Note that the angular variation of the scattered light intensity from an ensemble of R-G particles is directly proportional to the corresponding particle form factor, $P(\theta)$ presented earlier.

The criteria for application of the R-G approximation are summarized by Eqs. (1) and (2), yet for many types of particles, they may be overly restrictive as has long been noted in the literature. For example, for polystyrene latex spheres of refractive index 1.59 in water of nominal refractive index 1.33, Eq. (1) would require $\left|\dfrac{1.59}{1.33}-1\right|$ to be □ 1.

But the value is actually 0.2, certainly not significantly smaller than 1.0 as suggested by that requirement. Indeed, for diameters well beyond 100 nm (the so-called "definition" of a nanoparticle), use of the R-G approximation via application of Eq. (5), for example, may be shown to yield sizes very close to that shown by direct application of Lorenz-Mie theory.

Although fitting scattering data to the R-G forms for the relatively simple structures, whose closed forms are shown in Eqs. (5) through (8), may be straight-forward though tedious, of greater importance are particles of more complex shape such as ellipsoids, tubes, aggregates, *etc.* The inventive method is directed to these particles and, of course, the simpler structures just discussed. We begin with reference to the mean square radius discussed earlier and defined with respect to a particle structure by Eq. (9). During the development of light scattering techniques and their application to polymer chemistry, measurement of the size of large molecules in addition to the determination of their molar mass became one of its objectives. Of course, such molecules in solution were all well described by the R-G approximation. An important consequence of this work was the relation between the particle scattering function $P(\theta)$ and the size implied through the mean square radius, $\left\langle r_g^2\right\rangle$ :

$$\lim_{\theta\to 0}P(\theta)=1-\frac{\mu^2}{3}\left\langle r_g^2\right\rangle=1-\left(\frac{4\pi^2}{3\lambda^2}\right)\sin^2(\theta/2)\left\langle r_g^2\right\rangle. \tag{10}$$

Therefore

$$\left\langle r_g^2\right\rangle=\lim_{\theta\to 0}\frac{-dP(\theta)}{d[\sin^2(\theta/2)]}\left(\frac{3\lambda^2}{4\pi^2}\right). \tag{11}$$

We have already indicated above the mean square radii for a sphere and a tube. Others of interest include

Rod $\qquad \langle r_g^2 \rangle = \dfrac{L^2}{12} + \dfrac{a^2}{2}$ $\qquad\qquad$ (12)

Tube $\quad \langle r_g^2 \rangle = \dfrac{L^2}{12} + a^2 + \dfrac{t^2}{2} - at$ $\qquad\qquad$ (13)

Disk $\qquad \langle r_g^2 \rangle = \dfrac{a^2}{2} + \dfrac{t^2}{12}$ (radius $a$ and thickness $t$) $\qquad\qquad$ (14)

Plank $\qquad \langle r_g^2 \rangle = \dfrac{1}{12}\left(L^2 + t^2 + w^2\right)$ $\qquad\qquad$ (15)

Ellipsoid of revolution $\qquad \langle r_g^2 \rangle = \dfrac{2a^2 + b^2}{5}$ $\qquad\qquad$ (16)

Ellipsoid $\qquad \langle r_g^2 \rangle = \dfrac{a^2 + b^2 + c^2}{5}$ $\qquad\qquad$ (17)

Ring $\qquad \langle r_g^2 \rangle = a^2 - at + \dfrac{7}{12} t^2$ $\qquad\qquad$ (18)

Hollow sphere of radius $a$ and thickness $t$ $\qquad \langle r_g^2 \rangle = \dfrac{3}{5} a^2 \dfrac{\left[1 - (1-x)^5\right]}{\left[1 - (1-x)^3\right]}, x = \dfrac{t}{a}$ $\qquad\qquad$ (19)

Spherical shell $\qquad \langle r_g^2 \rangle = a^2.$ $\qquad\qquad$ (20)

Two spheres, a > b $\quad \langle r_g^2 \rangle = \dfrac{3}{5}\dfrac{(a^5 + b^5)}{(a^3 + b^3)} + \dfrac{a^3\left(a-x\right)^2 + b^3\left(b+x\right)^2}{(a^3 + b^3)}, x = \dfrac{a^4 - b^4}{(a^3 + b^3)}.$ $\quad$ (21)

These results and many others like them certainly expand tremendously the analytical tools available for measuring such particles. Perhaps of even greater importance, and a main feature of the present invention, is its utility in expanding the range of such measurements even beyond the usual strictures of R-G theory. The use of derived mean square radii to extract particle sizes and structure directly, rather than attempting to fit collected MALS data to analytical forms such as Eqs. (5) through (8), is not new. Indeed, P. Kratochvil, in his Chapter 7 contribution to Huglin's classical book Light Scattering from Polymer Solutions (Academic Press, 1972), states clearly: "...The [mean square radius] is a very suitable quantity to characterize the particle dimensions, since it is defined equally for any particle shape...." What is new, however, and unique to the inventive method presented herewith is the fact that the measurements themselves need not be restricted to particles characterized by Eq. (2) throughout the range of accessible scattering angles. Let us consider an example of this inventive extension that is an exemplar of the inventive method.

The exemplar of the invention is the measurement of a fractionated aliquot of carbon nanotubes: SWCNT, *i.e.* single wall carbon nanotubes. Studies of carbon nanotubes have become very important in recent years with a great many of them using MALS and other light scattering techniques for their characterization. Their discovery and properties are described in a review article by Ando (J. Nanoscience and Nanotechnology 2010, 10, 3726-3738). Of particular interest for this invention are measurements by Fagan et al. (Adv. Mater. 2010, 20, 1-11 and Anal. Chem. 2008, 80, 2514-2523) of these nanotubes often separated by the A4F techniques mentioned earlier. Some of the interpretations of published papers by Gigault et al. (Microchim Acta 2011, 175, 265-271 and J. Chromatogr. A 2010, 1217, 7891-7897), for example, are confusing in some respects as they focus often on procedures commonly used to extract molar masses and sizes based on the graphical manipulations associated with so-called Zimm, Berry, or Debye plots, rather than the R-G approximation most often associated with particle size and structure. If the objective of an experimental measurement is the determination of the size and structure of particles in suspension, molar mass properties are essentially irrelevant.

If we are to interpret the measurements of such carbon nanotubes as reported in the cited references using the R-G approximation, we should visit again the strictures of Eqs. (1) and (2). Consider Eq. (1). The SWCNTs studied are basically just graphene tubes. The refractive index of various forms of graphite itself is reported by Bond and Duley (Aerosol. Sci. Technol. 2006, 40, 27-67, Aerosol. Sci. Technol. 1999, 30, 582-600, and Astrophys. J. 1984, 287, 694-696) in the ranges of (1.46 to 2.72) + (0.01 to 1.46) $i$ at 550nm. At 633nm, using interferometric picometrology, Wang and Nolte (http://meetings.aps.org/link/BAPS.2009.MAR.A25.12) obtained a value for graphene directly as 3.0 +1.4$i$. On this basis, in water, Eq. (1) yields $\left|m-1\right| = \left|\dfrac{3.0 + 1.4i}{1.33} - 1\right| = \left|1.256 + 1.053i\right| = \sqrt{(1.578 + 1.11)} = 1.64,$ a value that appears well in excess of satisfying Eq. (1) and the applicability of the R-G approximation.

Some of the measurements in the cited references use the R-G approximation and, for the case of SWCNTs, yield values of which many are well confirmed by electron microscopy, for a range of lengths up to a few hundred nanometers. Looking more closely, we note that the volumetric composition of such tubes includes a large fraction of water (or the fluids in which they are suspended). Since the incident wavelength is far larger than the tube diameter, we should judge the applicability of the R-G approximation based on the volume-weighted refractive index rather than the thin graphene container alone. Let us calculate this value.

The volume per unit length of a tube of radius $a$ and thickness $t$ is just $\pi t(2a - t)$. The diameters, however, are only about 1.2 nm and the thickness of the graphene itself should be about the diameter of the carbon atom or 0.154 nm. Thus the volume of the core water per unit length is about $\pi a^2$ where a=0.6-0.154=0.446nm; the 0.154 value representing the radius of the carbon atom. Weighting $\pi a^2$ by the refractive index of water, about 1.33, and $\pi t(2a - t)$ by the refractive index of graphene (about 3+1.4$i$) and dividing by the unit volume $\pi a^2$ we obtain $|m-1| \approx 0.73$. This is a large value, certainly well beyond the strictures of even Eq. (2) except possibly for extremely small angles. This suggests immediately that if we are to have any chance of deriving physical properties from the measurements based on R-G theory, application of Eq. (2) will be essential. Thus, measurements at small scattering angles *might* permit reasonably good estimates of the mean square radius $\left\langle r_g^2 \right\rangle$ from which the tube lengths may be derived from earlier listed result

$$\left\langle r_g^2 \right\rangle = \frac{L^2}{12} + a^2 + \frac{t^2}{2} - at \ .$$ As the tube lengths reported in the cited references are in the tens of nanometers, terms involving $a$ and $t$ are negligible and may be dropped to determine $L$ directly from the corresponding rms radius, *i. e.* $\left\langle r_g^2 \right\rangle$ = $L^2 / 12$. This, of course, is just the result for an infinitely thin rod: the rod model. It is important to note that application of the rod model as commonly applied in the literature, such as the previously cited papers by Gigault and Fagan, is based on fitting the data to Eq. (7), and never calculated from measurement of the mean square radius.

It is important to note that as long as structures have effectively-weighted refractive indices that are close to those of the surrounding medium, as discussed herein, the results expected for sizes derived from mean square radius values can be both useful and reasonably accurate (generally about ±10%). However, if the effective refractive indices are too large, then the R-G approximation will probably fail. For example, if the SWCNTs were actually wires, *i.e.* the effective refractive index is that of graphene, *i.e.* large and complex, there is no chance for applicability. The stricture of Eq. (1), $|m -1| \ll 1$, has been a major requirement of the R-G approximation. For latex spheres and SWCNTs, Eq. (1) yields values less than 1.0, but not $\ll 1$. It is a fundamental conclusion of the present inventive method that as long as the particle is of a size comparable to the wavelength of the incident radiation or smaller, deriving quantitative results based on measurement of the mean square radius may be expected. Until the invention described herein, such larger particle sizes could not be derived from MALS measurements.

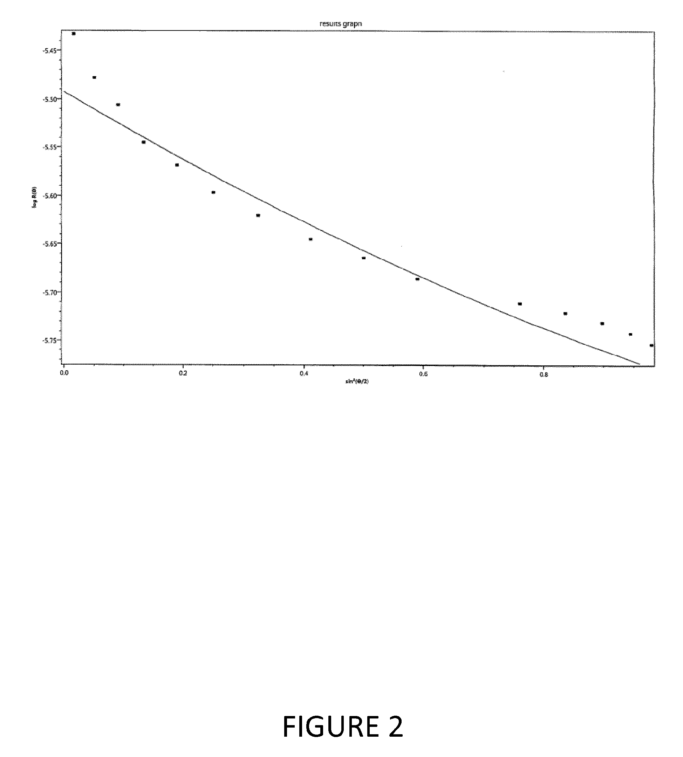

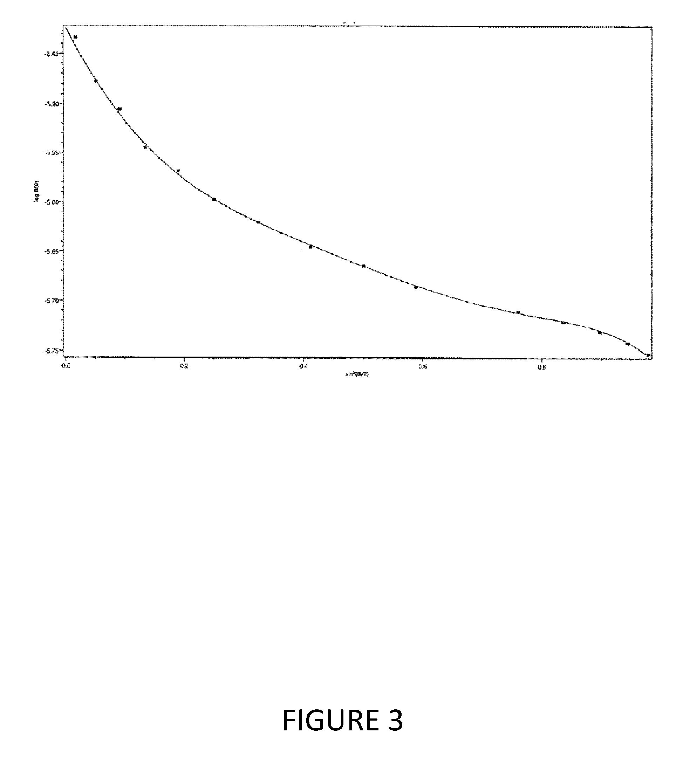

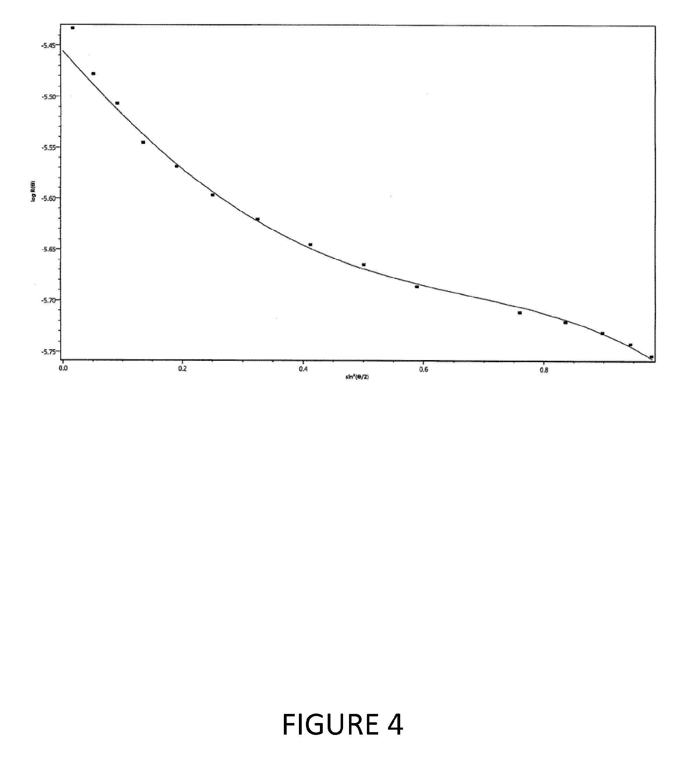

Figure 2 shows the fit of the rod model of Eq. (7) to the data collected from a fractionated sample of single wall carbon nanotubes. The particles were separated by size using Wahlund field flow fractionation (W3F), most often referred to as asymmetric flow field flow fractionation (A4F) [Cf. K-G. Wahlund and J. C. Giddings, Analytical Chemistry 59, 1332-1339, (1987).] Figure 3 shows the 90° scattered intensities of the fractionated sample with the vertical bar corresponding to the slice presented in Fig. 2. MALS data were collected at the points indicated in Fig. 2 and whose angular locations are indicated by the abscissa values of $\sin^2(\theta / 2)$. These angles are listed explicitly in Table 1. The calculation per Eq. (7) for that slice yields a length $L$ = 227 ± 5. If we now measure the mean square radius and apply Eq. (12), we

obtain $\left\langle r_g^2 \right\rangle = 122 \pm 7$ and, therefore, $L = 423 \pm 24$, based on the exemplar fit to the data shown in Fig. 4. The inventive method, now to be described, is best illustrated by this figure. Over much of its range, the validity of Eq. (2) is obviously not true. However, extracting a mean square radius based on the data of Fig. 4 at very small angles produces a value that is far closer to the length of these rods based on electron microscopy measurements.

**Table 1. Light scattering detector angles, $\theta$, and $\sin^2(\theta/2)$ for K5 glass cell**

| Detector | Scattering angle | $\sin^2(\theta/2)$ |
|---|---|---|
| 1 | 14.4° | $1.59 \times 10^{-2}$ |
| 2 | 25.9° | $5.02 \times 10^{-2}$ |
| 3 | 34.8° | $8.94 \times 10^{2}$ |
| 4 | 42.8° | $1.33 \times 10^{-1}$ |
| 5 | 51.5° | $1.88 \times 10^{-1}$ |
| 6 | 60.0° | $2.50 \times 10^{-1}$ |
| 7 | 69.3° | $3.23 \times 10^{-1}$ |
| 8 | 79.7° | $4.11 \times 10^{-1}$ |
| 9 | 90.0° | $5.00 \times 10^{-1}$ |
| 10 | 100.3° | $5.89 \times 10^{-1}$ |
| 11 | 121.2° | $7.59 \times 10^{-1}$ |
| 12 | 132.2° | $8.36 \times 10^{-1}$ |
| 13 | 142.5° | $8.97 \times 10^{-1}$ |
| 14 | 152.5° | $9.44 \times 10^{-1}$ |
| 15 | 163.3° | $9.79 \times 10^{-1}$ |

For many types of particle samples, application of R-G theory will be adequate to extract their important structural characteristics from their *a priori* known structures or by deriving their associated mean square radii. However, for some particle classes that may not satisfy Eq. (1) well, such as shown in the example of Fig. 2, Eq. (2) still may remain valid at very small angles. This latter observation suggests that application of Eq. (11) could be expected to produce a mean square radius, but for this purpose we need to replace the particle form factor $P(\theta)$ with a function that at very small angles will produce a more realistic value of the mean square radius. The inventive method uses the data recorded over a broad range of scattering angles to generate a form factor whose derivative with respect to $\sin^2(\theta/2)$ at $\theta = 0$ will yield a more accurate measure of the scattering particles' mean square radius. We call this the functional form factor $\Pi(\theta)$.

The introduction of, and means to generate, this very special functional form is described below. Instead of proceeding directly from Eq. (10), the form factor $\Pi(\theta)$ is itself the unique foundation of the inventive procedure disclosed here. Historically, Eq. (10) is the basis for calculating the mean square radius, $\left\langle r_g^2 \right\rangle$. Such a procedure invariably depends on having access to sufficiently small scattering angle data of the quality and quantity required to calculate the initial slope. However, data collected at such small angles often have relatively large fluctuations that produce considerable uncertainties in extracting an accurate value of this initial slope. In addition, such data often is not available in sufficient quantity over a broad enough range of small angles to calculate the slope from application of Eq. (11).

The analytical function $\Pi(\theta)$ is related to the particle scattering function $P(\theta)$ in the limit as $\theta \to 0°$ through

$$\lim_{\theta \to 0} \Pi(\theta) = P(\theta) = 1 - \frac{\mu^2}{3}\left\langle r_g^2 \right\rangle = 1 - \left(\frac{4\pi^2}{3\lambda^2}\right)\sin^2(\theta/2)\left\langle r_g^2 \right\rangle. \tag{22}$$

Thus, in the limit as $\theta \to 0$, $P(\theta) \equiv \Pi(\theta)$.

The generation and application of the analytical function $\Pi(\theta)$, from measurements of the MALS data collected from a sample is the basis of the invention. It is derived by the following steps:

i) Collect MALS data $I(0_i) = I_i$ from a monodisperse sample at $n$ scattering angles $\theta_i$, $i=1,\cdots,n$;

ii) Calculate a least squares fit of the collected data $(I_1, I_2, \cdots, I_n)$ to a polynomial function of order $m$ in the angular variable $\xi$,

$$f_m(\xi) = \sum_{i=0}^{m} (-1)^i c_i \xi^i, \text{ where } \xi = \sin^2(\theta/2) \text{ and } m \le n-1;$$

iii) Normalize the function $f_m(\xi)$ such that $\Pi(\theta)=f_m(\xi)/c_0$. Note that $\Pi(0°)=1$.

It should be noted that the scale of the angular data collected is irrelevant to the final determination of Eq. (21). The analytical function $\Pi(\theta)$ is, therefore, derived from the experimental measurements. Such measurements correspond an averaging of the scattering by an illuminated particle over all of its orientations with respect to the direction of the incident light. Were we to measure the scattering from an ensemble of thin rigid rods, the derived function $\Pi(\theta)$ would be effectively identical to the complex scattering described by Eq. (7), but expressed instead as a power series in $\sin^2(\theta/2)$. But the analytical function $\Pi(\theta)$ is far more general than such an ensemble of infinitely thin rods would imply. For many types of particles measured, the generated $\Pi(\theta)$ will not comply with the stricture of Eq. (2) except at the very smallest of angles. These are the angles always least accessible for the measurements required to generate the mean square radius $\langle r_g^2 \rangle$. By deriving the analytical function $\Pi(\theta)$ from the scattering data collected from MALS measurement, the inventive method is able to produce a mean square radius that will permit the recovery of particle structural features even for particles that lie well beyond the restrictions of Eq. (2).

The least squares fit of the collected data to the function $f_m(\xi)$ produces the values of the coefficients $c_i$, $i = 0, 1, ..., m$ and, thereby, $\Pi(\theta)$. From the functional form thus derived, the mean square radius is calculated from Eq. (11), *i.e.*

$$\langle r_g^2 \rangle = \lim_{\theta \to 0} \frac{-d\Pi(\theta)}{d[\sin^2(\theta/2)]} \left( \frac{3\lambda^2}{4\pi^2} \right). \tag{23}$$

However, since $\Pi(\theta)=f_m(\xi)/c_0$, we have the immediate result

$$\langle r_g^2 \rangle = \frac{c_1}{c_0} \left( \frac{3\lambda^2}{4\pi^2} \right). \tag{24}$$

As is well known, a weighted least squares fit also may be made by the suitable weighting of the squared difference terms of each datum $I(\theta_i)$ by its normalized reciprocal standard deviation $\dfrac{1/\sigma_i}{\sum 1/\sigma_i}$, where the standard deviation of $I(\theta_i)$ is $\sigma_i$. The details of this weighted least squares fit may be found elsewhere. For the present disclosure, we consider only the simplest least squares fitting procedures where each squared difference is equally weighted.

It remains to determine how the optimal value of the polynomial order, $m$, be selected. As a "rule of thumb," we might select $m \approx 2kL = 4\pi L / \lambda$, where $L$ is the approximate "size" (diameter, length, *etc.*) of the scattering particles. For SWCNT rods of approximate length 225nm at a wavelength of 658nm in water, this would suggest about 6 terms. Alternatively, the choice may be made by examination of the fit of $\Pi_m(\theta)$ to the data. Thus Fig. (4) shows the fit to order 5 while Fig. (5) shows an inferior fit to order 3. Most important is the fit at the smaller angles, *i.e* where Eq. (2) is valid. Although there are quantitative means by which the quality of such fitting may be judged, key will always be the deviations observable when the data at low angles are compared to a plot of the selected polynomial representation. The superiority of the 5th order fit of Fig. 4 is clearly shown by comparison to the 3rd order fit of Fig. 5.

Once the mean square radius of an elution aliquot has been determined by the inventive method summarily described, its further application may depend on additional *a priori* information of the particle structures that produced the MALS data. For example, for rods such as those of cellulose or carbon nanotubes, we will need some structural information that will have been obtained by electron microscopy or other means. Assuming that the fractionation technique has separated the sample of such particles by their length (with each fraction corresponding to a monodisperse length), earlier electron microscopy measurements of the sample will have confirmed the uniform thickness of the rods with a measurement of this dimension. Applying Eq. (12) with the value of $a$ derived from the microscopy measurements, the length of each monodisperse fraction may be calculated immediately. From such results for each fraction (slice), the size distribution and number density distributions may be extracted from the complete data set using the methods, for example, described in the U. S. Patent 6,774,994.

For particles in liquid suspension, the method for determining their mean square radius, $\left\langle r_g^2 \right\rangle$, follows:

1) Prepare a sample of particles of known structure in a suspension at a suitable concentration that will avoid particle-particle interactions and multiple scattering;

2) Fractionate the sample by chromatographic or other means so that each fraction is comprised of effectively monodisperse particles, *i.e.* all of the same composition and dimensions;

3) Illuminate a monodisperse fraction of such particles with a fine beam of light (preferably vertically polarized, from a laser source, and monochromatic, though multi-wavelengths may be useful) and measure the intensity of scattered light $I(\theta)$ at a plurality of $n$ scattering angles $\theta_i$ where $i$ = 1, 2, ..., $n$;

4) Calculate a least squares fit of the collected data to a polynomial function of order $m$ in $\xi$ $f_m(\xi) = \sum_{i=0}^{m}(-1)^i c_i \xi^i$, where $\xi = \sin^2(\theta/2)$ and $m \leq n$ -1;

5) Optimize the order $m$ of the fit of step (4) by visual comparison of such fits to the measured scattered intensities $I_i(\theta_i)$ at angles $\theta_i$, $i$ = 1,···, $n$ or by means of a previously presented relation such as $m \approx 4\pi L/\lambda$ to select a most probable order, or by other means;

6) Calculate from such selected fit, the coefficients $c_i$ of the powers $\xi^i$ of the polynomial function of order $m$ $f_m(\xi)$ for $i$ = 0,1,···,$m$;

7) Calculate the mean square radius from $\left\langle r_g^2 \right\rangle = \dfrac{c_1}{c_0}\left(\dfrac{3\lambda^2}{4\pi^2}\right)$.

Note that the coefficient $c_0$ provides the normalization required to make the collected data values commensurate with the requirement that the form factor $P(\theta) \leq 1$.

It is important to point out that the inventive elements presented are not exclusively directed to suspensions of particles in liquid solution. The method has additional application to particles in a gas such as air, including single particle measurements in air such as disclosed initially in U. S. Patent 3,624,835. For particles in gaseous or vacuum phase, the particles illuminated must be monodisperse. Single particles also may be so measured from measurement of the angular variation of light scattered therefrom. Thus the mean square radius of aerosol particles of a few hundred nanometers in diameter may be determined with good precision from measurement of their scattered light intensity at a plurality of scattering angles. Alternatively, such measurements may produce values that may be used subsequently as "seed" values for the iterative extraction from the exact LM theory. Such measurements are often achieved by means of passing single particles through a fine laser beam and collecting the scattered light produced during such transit at a plurality of detectors located on a spherical surface. A typical device capable of such measurement was described in an article by the inventor in the journal Applied Optics volume 27, pages 217 to 221, 1988.

As will be evident to those skilled in the arts of light scattering measurements and chromatographic separation, there are many obvious variations of the methods I have invented and described that do not depart from the fundamental elements that I have listed for its practice; all such variations are but obvious implementations of my invention described hereinbefore and are included by reference to my claims, which follow.

**Claims**

1. A method to measure the mean square radius of particles in a sample fraction comprised of predominantly monodisperse particles by the steps of

    A) illuminating said sample fraction by a fine light beam,
    B) measuring light scattered by such sample at a plurality of $n$ scattering angles;

    C) deriving a polynomial function $f_m(\xi) = \sum_{i=0}^{m} c_i(-1)^i \xi^i$, where $\xi = \sin^2(\theta/2)$ and $m \leq n$ -1, by making a least squares fit of said function to the data collected at the $n$ scattering angles;

D) deriving thereby the coefficients $c_0, c_1, \cdots, c_m$;

E) forming the function $\Pi(\theta) = f_m(\xi)/c_0$; and

F) determining said mean square radius from $\left\langle r_g^2 \right\rangle = \lim\limits_{\theta \to 0} \dfrac{-d\Pi(\theta)}{d[\sin^2(\theta/2)]} \left( \dfrac{3\lambda^2}{4\pi^2} \right) = \dfrac{c_1}{c_0} \left( \dfrac{3\lambda^2}{4\pi^2} \right)$.

2. The method of Claim **1** where said fine light beam is from a laser.

3. The method of Claim **1** where said fine light beam is polarized.

4. The method of Claim **1** where said polynomial function is derived from a weighted least squares least squares fit of said function to the data collected at the *n* scattering angles.

5. The method of Claim **4** where such weighting associated with each collected angular scattered intensity $I_i(\theta_i)$ is proportional to $\dfrac{1/\sigma_i}{\sum 1/\sigma_i}$, where $\sigma_i$ is the measured standard deviation of $I_i(\theta_i)$.

6. A method to determine by multiangle light scattering (MALS) a dimension of monodisperse particles of known shape in suspension by

   A) illuminating a sample fraction of said suspended particles by a fine light beam,
   B) measuring the scattered light intensity from such particles at a plurality of scattering angles,
   C) fitting said scattered light intensities by least squares means to an analytical polynomial function $f(\theta)$ within the interval $0 \le \theta \le 180°$ so normalized that its value at $\theta = 0$ is 1.0 and its values at all angles $\theta$ are such that $0 \le f(\theta) \le 1$,
   D) calculating the slope of said analytical function with respect to $\sin^2(\theta/2)$ at $\theta = 0$,
   E) deriving from said slope the mean square radius $\left\langle r_g^2 \right\rangle$ of said scattering particles, and
   F) calculating therefrom a dimension of said monodisperse particles.

7. The method of Claim **6** where said analytical function is of the form $f(\theta) = \sum\limits_{i=0}^{m} c_i(-1)^i \sin^{2i}(\theta/2)$ and *m* is less than the number of scattering angles measured.

8. The method of Claim **6** where said particles are ellipsoids of revolution whose minor axis *a* is known and whose major axis *b* is determined from the relation $\left\langle r_g^2 \right\rangle = \dfrac{2a^2 + b^2}{5}$.

9. The method of Claim **8** where said minor axis *a* has been measured by microscopic means.

10. The method of Claim **6** where said fine light beam is from a laser.

11. The method of Claim **6** where said plurality of scattering angles $\theta_i$ are within the range $0° < \theta_i < 180°$.

12. The method of Claim **6** where said analytical function is of the form $f(\theta) = \sum\limits_{i=0}^{m} c_i(-1)^i \sin^{2i}(\theta/2)$ and *m* is less than the number of scattering angles measured.

13. The method of Claim **6** where said particles are tubes whose radius is *a*, thickness is *t*, and mean square radius $\left\langle r_g^2 \right\rangle = \dfrac{L^2}{12} + a^2 + \dfrac{t^2}{2} - at$.

14. The method of Claim **6** where said fine laser beam is vertically polarized.

incident beam

detectors

transmitted beam

detectors

PRIOR ART

FIGURE 1

FIGURE 2

FIGURE 3

# FIGURE 4

Europäisches
Patentamt

European
Patent Office

Office européen
des brevets

## EUROPEAN SEARCH REPORT

Application Number

EP 15 17 6668

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 510 807 A1 (WYATT TECHNOLOGY [US]) 2 March 2005 (2005-03-02) * paragraphs [0028], [0030], [0033] * * paragraph [0035] - paragraph [0038] * ----- | 1-14 | INV. G01N15/02 G01N21/47 |
| X | THIERKING H ET AL: "ON-LINE COUPLING OF FLOW FIELD-FLOW FRACTIONATION AND MULTIANGLE LASER LIGHT SCATTERING FOR THE CHARACTERIZATION OF POLYSTYRENE PARTICLES", ANALYTICAL CHEMISTRY, AMERICAN CHEMICAL SOCIETY, US, vol. 67, no. 18, 15 September 1995 (1995-09-15), pages 3229-3233, XP000532344, ISSN: 0003-2700, DOI: 10.1021/AC00114A020 * abstract; figures 1-4; table 1 * * page 3229, left-hand column * * page 3230, left-hand column, paragraph 2 - right-hand column, paragraph 2 * * page 3231, left-hand column, paragraph 4 - paragraph 7 * * page 3232, left-hand column, paragraph 3 * ----- -/-- | 1-14 | |

TECHNICAL FIELDS
SEARCHED      (IPC)

G01N

The present search report has been drawn up for all claims

| Place of search | Date of completion of the search | Examiner |
|---|---|---|
| The Hague | 19 November 2015 | Lefortier, Stéphanie |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

| | Europäisches Patentamt<br>European Patent Office<br>Office européen des brevets | **EUROPEAN SEARCH REPORT** | **Application Number**<br>EP 15 17 6668 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | Michael Larkin ET AL: "Light-Scattering Techniques and their Application to Formulation and Aggregation Concerns"<br>In: "Formulation and Process Development Strategies for Manufacturing Biopharmaceuticals",<br>26 July 2010 (2010-07-26), John Wiley & Sons, Inc., Hoboken, N.J., XP055227729,<br>ISBN: 978-0-470-11812-2<br>pages 269-305, DOI: 10.1002/9780470595886.ch12,<br>* figures 12.1, 12.3 *<br>* page 271, paragraph 5 *<br>* page 272, paragraph 3 - page 273, paragraph 1 *<br>* page 274, paragraph 2 *<br>* page 276, paragraph 2 *<br>----- | 1-14 | |
| X | P. Kratochvil: "Particle scattering functions"<br>In: "Light scattering from polymer solutions",<br>31 December 1972 (1972-12-31), Academic Press Inc., XP055227982,<br>ISBN: 978-0-12-361050-8<br>pages 333-385,<br>* figure 2 *<br>* page 334, paragraph 3 - page 335, paragraph 1 *<br>* page 336, paragraph 4 - page 337, paragraph 3 *<br>* page 340, paragraph 3 *<br>* page 344, paragraph 1 *<br>-----<br>-/-- | 1-14 | TECHNICAL FIELDS<br>SEARCHED (IPC) |

The present search report has been drawn up for all claims

| Place of search | Date of completion of the search | Examiner |
|---|---|---|
| The Hague | 19 November 2015 | Lefortier, Stéphanie |

EPO FORM 1503 03.82 (P04C01)

Europäisches
Patentamt
European
Patent Office
Office européen
des brevets

**EUROPEAN SEARCH REPORT**

Application Number

EP 15 17 6668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 129 723 A (HOWIE JANET [US] ET AL) 14 July 1992 (1992-07-14) * figures 1,2 * * column 1, line 53 - column 2, line 50 * * column 6, line 9 - line 28 * ----- | 1-14 | |
| A | WYATT P J ED - WAITE T DAVID ET AL: "SUBMICROMETER PARTICLE SIZING BY MULTIANGLE LIGHT SCATTERING FOLLOWING FRACTIONATION", JOURNAL OF COLLOID AND INTERFACE SCIENCE, ACADEMIC PRESS, NEW YORK, NY, US, vol. 197, 1 January 1998 (1998-01-01), pages 9-20, XP001172498, ISSN: 0021-9797, DOI: 10.1006/JCIS.1997.5215 * figure 1 * * page 11, right-hand column, paragraph 3 - page 12, left-hand column, paragraph 3 * ----- | 1-14 | |

TECHNICAL FIELDS
SEARCHED (IPC)

The present search report has been drawn up for all claims

| Place of search | Date of completion of the search | Examiner |
|---|---|---|
| The Hague | 19 November 2015 | Lefortier, Stéphanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 17 6668

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2015

| Patent document cited in search report | | Publication date | Patent family member(s) | | Publication date |
|---|---|---|---|---|---|
| EP 1510807 | A1 | 02-03-2005 | DE | 60319078 T2 | 05-02-2009 |
| | | | EP | 1510807 A1 | 02-03-2005 |
| US 5129723 | A | 14-07-1992 | NONE | | |

For more details about this annex : see Official Journal of the European Patent Office, No. 12/82

## REFERENCES CITED IN THE DESCRIPTION

**Patent documents cited in the description**

- US 6774994 B

- US 3624835 A

**Non-patent literature cited in the description**

- *Applied Optics,* 1968, vol. 7, 1879-1896
- **INDEED, P. KRATOCHVIL.** Light Scattering from Polymer Solutions. Academic Press, 1972
- **ANDO.** *J. Nanoscience and Nanotechnology,* 2010, vol. 10, 3726-3738
- **FAGAN et al.** *Adv. Mater.,* 2010, vol. 20, 1-11
- *Anal. Chem.,* 2008, vol. 80, 2514-2523
- **GIGAULT et al.** *Microchim Acta,* 2011, vol. 175, 265-271

- *J. Chromatogr. A,* 2010, vol. 1217, 7891-7897
- **BOND ; DULEY.** *Aerosol. Sci. Technol.,* 2006, vol. 40, 27-67
- *Aerosol. Sci. Technol.,* 1999, vol. 30, 582-600
- *Astrophys. J.,* 1984, vol. 287, 694-696
- **K-G. WAHLUND ; J. C. GIDDINGS.** *Analytical Chemistry,* 1987, vol. 59, 1332-1339
- *journal Applied Optics,* 1988, vol. 27, 217-221